(19) **Europäisches Patentamt / European Patent Office / Office européen des brevets**

(11) **EP 3 977 777 B1**

(12) **FASCICULE DE BREVET EUROPEEN**

(45) Date de publication et mention de la délivrance du brevet:
**17.09.2025 Bulletin 2025/38**

(21) Numéro de dépôt: **20729663.3**

(22) Date de dépôt: **25.05.2020**

(51) Classification Internationale des Brevets (IPC):
*H04W 28/16* (2009.01)   *H04W 28/24* (2009.01)
*H04W 16/14* (2009.01)

(52) Classification Coopérative des Brevets (CPC):
**H04W 28/16;** H04W 16/14; H04W 28/24

(86) Numéro de dépôt international:
**PCT/EP2020/064458**

(87) Numéro de publication internationale:
**WO 2020/239704 (03.12.2020 Gazette 2020/49)**

(54) **PROCEDE DE GESTION DE RESSOURCES DE TELECOMMUNICATIONS ALLOUEES DYNAMIQUEMENT A UNE PLURALITE D'OPERATEURS DE TELECOMMUNICATIONS, PRODUIT PROGRAMME D'ORDINATEUR ET DISPOSITIFS CORRESPONDANTS**

VERFAHREN ZUR DYNAMISCHEN VERWALTUNG VON EINER VIELZAHL VON TELEKOMMUNIKATIONSOPERATOREN DYNAMISCH ZUGEWIESENEN TELEKOMMUNIKATIONSBETRIEBSMITTELN, COMPUTERPROGRAMMPRODUKT UND ENTSPRECHENDE VORRICHTUNGEN

METHOD FOR MANAGING TELECOMMUNICATIONS RESOURCES DYNAMICALLY ALLOCATED TO A PLURALITY OF TELECOMMUNICATIONS OPERATORS, COMPUTER PROGRAM PRODUCT AND CORRESPONDING DEVICES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.05.2019 FR 1905642**

(43) Date de publication de la demande:
**06.04.2022 Bulletin 2022/14**

(73) Titulaire: **Orange**
**92130 Issy-les-Moulineaux (FR)**

(72) Inventeurs:
• **FROMENTOUX, Gaël**
  **92326 CHÂTILLON CEDEX (FR)**
• **LE GLEAU, Tangui**
  **92326 CHATILLON CEDEX (FR)**
• **MARJOU, Xavier**
  **92326 CHATILLON CEDEX (FR)**
• **RADIER, Benoît**
  **92326 CHATILLON CEDEX (FR)**

(74) Mandataire: **Vidon Brevets & Stratégie**
**16B, rue de Jouanet**
**BP 90333**
**35703 Rennes Cedex 7 (FR)**

(56) Documents cités:
**WO-A1-2018/004641        US-A1- 2014 357 218**
**US-A1- 2017 353 857**

**Description**

**Domaine de l'invention**

Le domaine de l'invention est celui de la mise en œuvre des réseaux de télécommunications, par exemple un réseau de télécommunications accès-fixe, radio-mobile, convergent accès-fixe et radio-mobile, etc.

L'invention se rapporte plus particulièrement à la gestion des ressources (e.g. ressources implémentées dans la boucle locale, ressources radio, ressources virtualisées, etc.) dans de tels réseaux de télécommunications.

L'invention a de nombreuses applications, notamment, mais non exclusivement, dans le domaine des réseaux de télécommunications conformes aux normes 3GPP (de l'anglais « 3rd Generation Partnership Project ») de dernières générations ou de générations futures.

**Art antérieur et ses inconvénients**

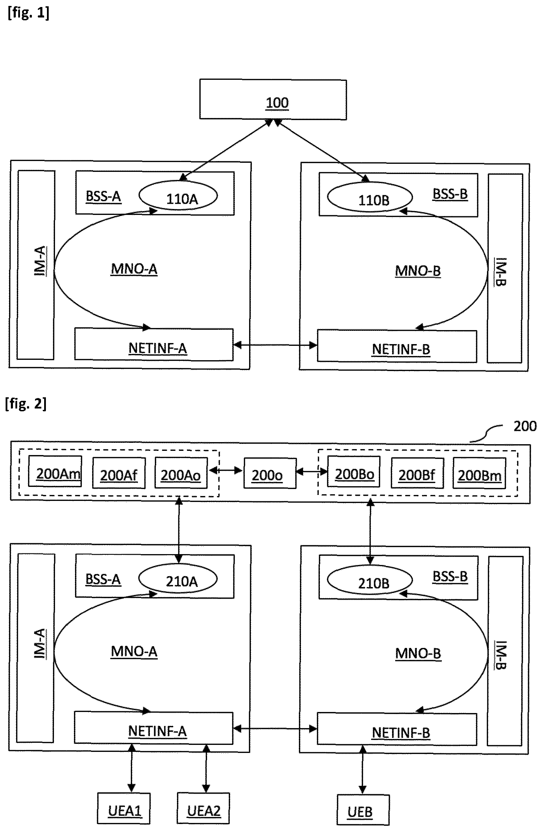

La mutualisation des réseaux de télécommunications avec de l'itinérance entre opérateurs est devenue un enjeu stratégique pour les opérateurs afin de réduire leurs coûts de couverture réseaux surtout dans les zones blanches, c'est-à-dire non couvertes par des réseaux, et pour lesquelles il peut être coûteux pour des opérateurs de déployer leurs infrastructures spécifiques. Notamment dans les zones à faible densité de population, le plus souvent un opérateur déploie un réseau, e.g. un réseau mobile, prioritairement pour assurer une connectivité à ses clients, mais aussi pour des clients d'autres opérateurs n'ayant pas déployé d'infrastructure dans la zone géographique. Une option alternative à cette option consiste à déployer une infrastructure de télécommunications en commun entre plusieurs opérateurs, chaque opérateur finançant une partie de l'infrastructure conformément à un accord signé entre les opérateurs. Selon les cas, une ou plusieurs parties de l'infrastructure de communication mobile peut être mutualisé. Ainsi, dans certains cas, uniquement l'infrastructure physique d'accès (pylônes, antennes, bâtiments...) est partagée. Dans d'autres cas le réseau d'accès ou l'ensemble du réseau de communication est partagé. Cette option de partage de réseaux est assez difficile à mettre en œuvre en raison des problèmes de sécurité et d'administration que cela entraîne pour les clients et les opérateurs. Dans ce contexte, l'idée d'un module (implémenté sous forme logicielle ou matérielle) commun à plusieurs opérateurs permettant à chaque opérateur de proposer et/ou obtenir de manière dynamique des ressources de télécommunications est avancée. Par exemple, le TM Forum (anciennement « TeleManagement Forum » en anglais) travaille, notamment via le projet « Catalyst », sur un tel module et sur les méthodes associées de gestion des ressources mises en commun entre différents opérateurs selon une structure du type de celle représentée sur la **fig. 1.** Plus particulièrement, la fig. 1 représente un module 100 de gestion centralisée de ressources de télécommunications pouvant être affectées dynamiquement à un premier opérateur MNO-A et à un deuxième opérateur MNO-B (ici des opérateurs mobiles). Le premier opérateur MNO-A interagit avec le module 100 via un module 110A dont la fonction est de représenter le premier opérateur MNO-A auprès du module 100 en question. De même, le deuxième opérateur MNO-B interagit avec le module 100 via un module 110B représentant le deuxième opérateur MNO-B auprès du module 100.

Le module BSS-A implémente les fonctionnalités permettant de prendre en charge une gamme de services de télécommunications par le premier opérateur MNO-A. De même, le module BSS-B implémente les fonctionnalités permettant de prendre en charge une gamme de services de télécommunications par le deuxième opérateur MNO-B.

La fonction de gestion intelligente IM-A du premier opérateur MNO-A est en charge :

- d'une part de prévoir l'état (manque ou surabondance) des ressources en observant l'infrastructure de réseau NETINF-A (une telle infrastructure comprenant par exemple un ou plusieurs nœuds de réseau) et de les communiquer au module 110A. Les ressources en question sont par exemple de la capacité au niveau d'une station de base, ou au niveau d'une desserte de boucle locale, ou encore des ressources, dites virtualisées, implémentées en amont d'un réseau afin d'implémenter des fonctions virtualisées, etc. ;
- d'autre part d'appliquer les ordres provenant du module 110A et de les appliquer à l'infrastructure de réseau NETINF-A.

De même, la fonction de gestion intelligente IM-B du deuxième opérateur MNO-B implémente les mêmes fonctionnalités, i.e. d'une part prévoir l'état (manque ou surabondance) des ressources en observant l'infrastructure de réseau NETINF-B (une telle infrastructure comprenant par exemple un ou plusieurs nœuds de réseau) et les communiquer au module 110B, et d'autre part appliquer les ordres provenant du module 110B et les appliquer à l'infrastructure de réseau NETINF-B.

De la sorte, des échanges de ressources entre les opérateurs MNO-A et MNO-B peuvent se faire de manière dynamique via le module 100. Les requêtes en ressources ainsi que les offres de ressources de chaque opérateur MNO-A, MNO-B étant faites au module 100 par les modules 110A et 110B correspondants.

Cependant, de tels modules et méthodes associées de gestion des ressources se concentrent sur l'automatisation des échanges de ressources entre opérateurs sans adresser les problématiques annexes liées à la régulation des échanges en question.

Il existe ainsi un besoin pour remédier aux insuffisances/inconvénients de l'état de la technique, notamment en termes de régulation des échanges de ressources de télécommunications entre opérateurs voulant obtenir et/ou offrir de telles ressources.

Le document US 2017/353857 A1 divulgue un exemple de l'état de la technique.

Le document WO 2018/004641 A1 divulgue un autre exemple de l'état de la technique.

Le document US 2014/357218 A1 divulgue un autre exemple de l'état de la technique.

## Exposé de l'invention

Selon un aspect de l'invention, il est proposé un procédé de gestion de ressources de télécommunications selon la revendication 1.

Ainsi, l'invention propose une solution nouvelle et inventive pour gérer de manière dynamique des ressources de télécommunication (e.g. de la capacité au niveau d'une station de base, ou au niveau d'une desserte de boucle locale, ou encore des ressources virtualisées déportées en amont d'un réseau afin d'implémenter des fonctions virtualisées (e.g. des CU, de l'anglais « Central Units », au sens du 3GPP, de l'anglais « 3rd Generation Partnership Project ») dans le contexte où une pluralité opérateurs (e.g. mobiles et/ou fixes) cherchent à obtenir et/ou offrir de telles ressources.

Plus particulièrement, selon la méthode proposée, les offres émises par le module (logiciel ou matériel) de gestion centralisée des ressources à destination de la pluralité d'opérateurs comprennent des informations permettant de réguler les échanges de ressources entre opérateurs. Par exemple, l'information de fiabilité permet à l'opérateur requérant de se faire une opinion sur la qualité des ressources que l'opérateur offrant propose. De même, l'information d'objectif commun permet d'inciter l'opérateur requérant à accepter des offres de ressources qui vont dans le sens de l'objectif commun. De la sorte, il est obtenu un comportement global des différents opérateurs cherchant à obtenir et/ou offrir de telles ressources qui dépasse leur simple intérêt propre.

Alternativement, le module de gestion centralisée des ressources peut être distribué au niveau de chaque opérateur et les informations enregistrées dans le module en question peuvent dans ce cas être également certifiées par consensus par chaque opérateur en tant que registre distribué certifié.

Le fait que ledit au moins un module de gestion centralisée des ressources effectue en outre une réception de ladite au moins une offre de ressources émise par au moins un module, dit module offrant, de représentation dudit au moins un opérateur offrant auprès dudit au moins un module de gestion centralisée des ressources, permet à l'opérateur d'offrant d'optimiser l'usage de ses ressources lorsqu'elles sont inutilisées.

Selon un mode de réalisation, ledit au moins un module de gestion centralisée des ressources effectue en outre une réception d'une information émise par le module requérant et représentative d'une acceptation certifiée d'une offre de ressources parmi ladite au moins une offre de ressources envoyée au module requérant. L'acceptation est certifiée par un consensus obtenu sur un ensemble de résultats de fonctions modératrices appliquées à l'offre de ressources. Les fonctions modératrices sont associées aux différents opérateurs de la pluralité d'opérateurs. Par exemple, l'acceptation est certifiée lorsque le ratio entre d'une part le nombre de résultats de fonctions modératrices représentatifs d'un accord avec le fait que l'offre soit acceptée par l'opérateur l'ayant reçue et d'autre part le nombre total de résultats de fonctions modératrices est supérieur à un seuil prédéterminé (e.g. 50%, 66%, etc.). Ainsi, l'ensemble des opérateurs cherchant à obtenir et/ou offrir les ressources peuvent vérifier que l'acceptation de l'offre par l'opérateur requérant respecte une ou plusieurs règles préalablement définies. Il peut s'agir par exemple de contraintes réglementaires émises par un organisme de régulation (e.g. pour la couverture radio d'une zone géographique donnée).

Selon un autre aspect de l'invention, il est proposé un procédé de gestion de ressources de télécommunications selon la revendication 3.

Ainsi, l'information de fiabilité permet par exemple à l'opérateur requérant de se faire une opinion sur la qualité des ressources que l'opérateur offrant propose. De même, l'information d'objectif commun permet d'inciter l'opérateur requérant à accepter des offres de ressources qui vont dans le sens de l'objectif commun. De la sorte, il est obtenu un comportement global des différents opérateurs cherchant à obtenir et/ou offrir de telles ressources qui dépasse leur simple intérêt propre.

Selon un mode de réalisation, le module requérant effectue en outre une acceptation certifiée d'une offre de ressources parmi ladite au moins une offre de ressources envoyée par ledit au moins un module de gestion centralisée des ressources. L'offre de ressources est acceptée en tenant compte de l'information d'objectif commun et/ou de ladite au moins une information de fiabilité. L'acceptation est certifiée par un consensus obtenu sur un ensemble de résultats de fonctions modératrices appliquées à l'offre de ressources, les fonctions modératrices étant associées aux différents opérateurs de la pluralité d'opérateurs.

Par exemple, l'acceptation est certifiée lorsque le ratio entre d'une part le nombre de résultats de fonctions modératrices représentatifs d'un accord avec le fait que l'offre soit acceptée par l'opérateur l'ayant reçue et d'autre part le nombre total de résultats de fonctions modératrices est supérieur à un seuil prédéterminé (e.g. 50%, 66%, etc.). Ainsi, l'ensemble des opérateurs cherchant à obtenir et/ou offrir les ressources peuvent vérifier que l'acceptation de l'offre par l'opérateur requérant respecte une ou plusieurs règles préalablement définies. Il peut s'agir par exemple de contraintes réglementaires émises par un organisme de régulation (e.g. pour la couverture radio d'une zone géographique donnée pour un opérateur mobile).

Selon un mode de réalisation, le module requérant effectue en outre un envoi, audit au moins un module de gestion centralisée des ressources, d'une information représentative de l'acceptation de manière certifiée de l'offre de ressources.

Ainsi, la transaction certifiée est enregistrée de manière certifiée dans le (ou les) module de gestion centralisée des ressources.

Selon un mode de réalisation, le module requérant effectue en outre une mise à jour de l'information de fiabilité concernant l'opérateur offrant ayant proposé l'offre de ressources acceptée de manière certifiée.

Ainsi, l'opérateur requérant note l'offre faite par l'opérateur offrant. Par exemple, une telle note concerne la qualité des ressources offertes, si la transaction a bien été effectuée jusqu'au bout, etc. Une telle note est par exemple basée sur des notations remontées à l'opérateur par des clients utilisateurs de terminaux connectés aux ressources proposées par l'opérateur offrant (e.g. via des notifications par SMS (de « Short Message Service » en anglais) ou USSD (de « Unstructured Supplementary Service Data » en anglais), ou encore par des mécanismes de services web). Le mécanisme inverse peut être prévu au niveau du module de représentation de l'opérateur offrant qui peut ainsi noter la transaction acceptée par l'opérateur requérant.

Selon un mode de réalisation, l'information d'objectif commun est fonction d'une somme d'informations représentatives d'un objectif individuel de gestion des ressources, dite information d'objectif individuel, de chaque opérateur de la pluralité d'opérateurs de télécommunications. Selon un mode de réalisation, l'information d'objectif commun est fonction d'une information de pénalité et l'offre de ressources est acceptée en cherchant à minimiser la pénalité afin d'atteindre l'objectif commun.

Par exemple la pénalité s'exprime comme une somme de pénalités individuelles correspondant à la mise en œuvre d'un critère d'un prêté pour un rendu appliqué d'une part aux ressources acceptées par l'opérateur requérant et d'autre part aux ressources offertes par le même opérateur. De la sorte, un opérateur est incité à équilibrer les échanges de ressources en offrant autant de ressources (e.g. des ressources d'un certain type) qu'il n'en demande (e.g. des ressources d'un autre types) afin que l'information d'objectif commun soit représentative d'un objectif commun atteint.

Selon un mode de réalisation, le module requérant effectue une mise à jour de l'information d'objectif individuel de l'opérateur requérant suite à l'acceptation de manière certifiée de l'offre de ressources.

L'invention concerne également un programme d'ordinateur comprenant des instructions de code de programme pour la mise en œuvre du procédé tel que décrit précédemment, selon l'un quelconque de ses différents modes de réalisation, lorsqu'il est exécuté sur un ordinateur.

Selon un autre aspect de l'invention, il est proposé un dispositif de gestion centralisée de ressources de télécommunications selon la revendication 11. Un tel dispositif de gestion comprend une machine de calcul reprogrammable ou une machine de calcul dédiée configurée pour mettre en œuvre les étapes du procédé de gestion selon l'invention telle qu'effectuées par le module précité de gestion centralisée de ressources de télécommunications (selon l'un quelconque des différents modes de réalisation précités).

Ainsi, les caractéristiques et avantages de ce dispositif sont les mêmes que ceux des étapes correspondantes du procédé de gestion décrit précédemment. Par conséquent, ils ne sont pas détaillés plus amplement.

Selon un autre aspect de l'invention, il est proposé un dispositif de représentation selon la revendication 12. Un tel dispositif de gestion comprend une machine de calcul reprogrammable ou une machine de calcul dédiée configurée pour mettre en œuvre les étapes du procédé de gestion selon l'invention telle qu'effectuées par le module précité de représentation d'un opérateur de télécommunications de la pluralité d'opérateurs de télécommunications (selon l'un quelconque des différents modes de réalisation précités).

Ainsi, les caractéristiques et avantages de ce dispositif sont les mêmes que ceux des étapes correspondantes du procédé de gestion décrit précédemment. Par conséquent, ils ne sont pas détaillés plus amplement.

Selon un autre aspect de l'invention, il est proposé un nœud de réseau de télécommunications selon la revendication 13. Un tel nœud de réseau comprend au moins un dispositif parmi les dispositifs précités (selon l'un quelconque des différents modes de réalisation précités), i.e. dispositif de gestion de gestion centralisée de ressources de télécommunications allouées dynamiquement à une pluralité d'opérateurs de télécommunications et dispositif de représentation, auprès d'au moins un module de gestion centralisée de ressources de télécommunications allouées dynamiquement à une pluralité d'opérateurs de télécommunications, d'un opérateur de télécommunications de la pluralité.

**EP 3 977 777 B1**

**Liste des figures**

D'autres buts, caractéristiques et avantages de l'invention apparaîtront plus clairement à la lecture de la description suivante, donnée à titre de simple exemple illustratif, et non limitatif, en relation avec les figures, parmi lesquelles :

[Fig. 1], déjà discutée ci-dessus dans la section « Art antérieur et ses inconvénients », représente différents modules permettant à plusieurs opérateurs de proposer et/ou obtenir de manière dynamique des ressources de télécommunications selon une technique connue ;

[Fig. 2] représente différents modules permettant à plusieurs opérateurs de proposer et/ou obtenir de manière dynamique des ressources de télécommunications ;

[Fig. 3] représente les étapes d'un procédé de gestion des ressources mis en œuvre par les différents modules de la fig. 2; et

[Fig. 4] représente un exemple de structure de dispositif permettant la mise en œuvre des étapes du procédé de gestion de la fig. 3.

**Description détaillée de modes de réalisation de l'invention**

Le principe général de l'invention repose sur l'utilisation d'une ou plusieurs informations accompagnant les offres de ressources émises par un module de gestion centralisée de ressources de télécommunications à destination des différents opérateurs cherchant à obtenir et/ou offrir des ressources via le module de gestion centralisée en question. Plus particulièrement, une offre de ressources émise selon la technique décrite comprend une information, dite information d'objectif commun, représentative d'un objectif de gestion des ressources qui soit commun à l'ensemble des différents opérateurs cherchant à obtenir et/ou offrir des ressources via le module de gestion centralisée des ressources, et/ou une information de fiabilité de l'opérateur de télécommunications proposant l'offre de ressources en question. De la sorte, il est obtenu un comportement global des différents opérateurs cherchant à obtenir et/ou offrir des ressources via le module de gestion centralisée qui dépasse leur simple intérêt propre.

Dans la présente demande, on notera de manière générale que le terme module peut correspondre aussi bien à un composant logiciel qu'à un composant matériel ou un ensemble de composants matériels et logiciels. Un composant logiciel correspond lui-même à un ou plusieurs programmes ou sous-programmes d'ordinateur ou de manière plus générale à tout élément d'un programme apte à mettre en œuvre une fonction ou un ensemble de fonctions telles que décrites pour le (ou les) module concerné. De la même manière, un composant matériel correspond à tout élément d'un ensemble matériel (ou hardware) apte à mettre en œuvre une fonction ou un ensemble de fonctions pour le (ou les) module concerné (circuit intégré, carte à puce, carte à mémoire, etc.). Dans ce cas, le composant matériel prend la forme d'un dispositif configuré pour mettre en œuvre une fonction ou un ensemble de fonctions telles que décrites pour le (ou les) module concerné.

On présente désormais, en relation avec la **fig. 2** un module 200 commun de gestion centralisée des ressources de télécommunications allouées dynamiquement à un premier opérateur MNO-A et à un deuxième opérateur MNO-B, ainsi que des modules 210A et 210B de représentation des opérateurs MNO-A et MNO-B auprès du module 200. De tels modules 200, 210A et 210B permettent notamment aux opérateurs MNO-A et MNO-B de proposer et/ou obtenir de manière dynamique des ressources de télécommunications selon un mode de réalisation de l'invention. Plus particulièrement, les opérateurs de télécommunications MNO-A et MNO-B sont ici des opérateurs mobiles. Deux terminaux utilisateurs UEA1 et UEA2 sont clients de l'opérateur MNO-A et utilisent les ressources de connectivité qui sont allouées à l'opérateur MNO-A. Un terminal UEB est client de l'opérateur MNO-B et utilise les ressources de connectivité qui sont allouées à l'opérateur MNO-B.

Dans d'autres modes de réalisation, tout ou partie des opérateurs proposant et/ou obtenant de manière dynamique des ressources de télécommunications auprès du module 200 sont des opérateurs fixes, des opérateurs convergent fixe-mobile, des opérateurs de hot-spot WiFi, des opérateurs de réseau d'entreprise, des opérateurs de réseaux locaux, ou tout autre type d'opérateur utilisant des ressources de télécommunications. Dans d'autres modes de réalisation, le module 200 gère les ressources pour plus de deux opérateurs.

De retour à la fig. 2, le module 200 intègre de nouvelles fonctionnalités par rapport au module 100 connu. Plus particulièrement, le module 200 intègre au moins trois modules pour chaque opérateur. Concernant l'opérateur MNO-A, lui sont associés :

- un module 200Am implémentant une fonction modératrice régulant les échanges de ressources selon une ou plusieurs règles de modération prédéfinies (e.g. des règles issues de contraintes réglementaires émises par un organisme de régulation) ;
- un module 200Af stockant une information de fiabilité associée à l'opérateur MNO-A ; et

**5**

- un module 200Ao stockant une information d'objectif individuel, i.e. associée à l'opérateur MNO-A, de gestion des ressources de télécommunication.

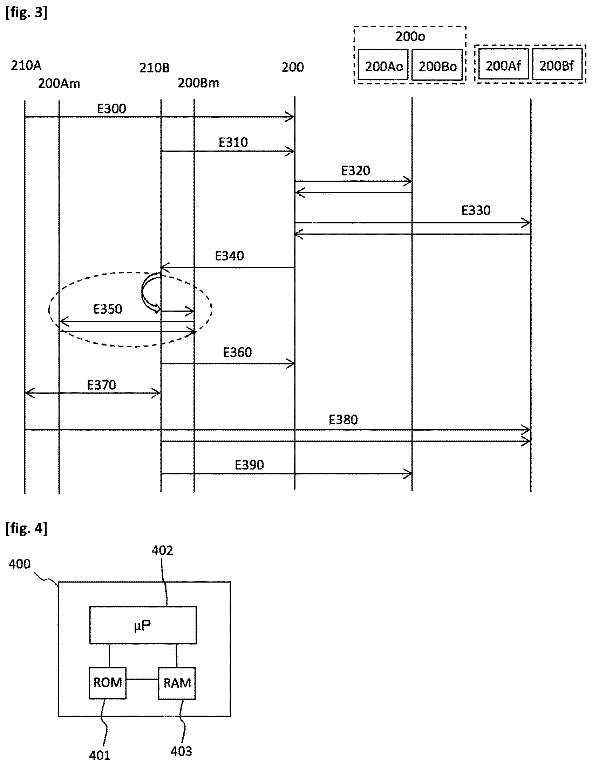

C'est différentes fonctionnalités sont décrites plus en détail ci-dessous en relation avec la fig. 3. Par ailleurs, le module 200 intègre les mêmes fonctionnalités associées à l'opérateur MNO-B via des modules 200Bm, 200Bf et 200Bo correspondants. Le module 200 intègre également un module 2000 stockant une information d'objectif commun, i.e. représentative d'un objectif de gestion des ressources qui est commun aux opérateurs MNO-A et MNO-B.

Chacun des différents modules précités, i.e 200, 210A, 200Am, 200Af, 200Ao, 210B, 200Bm, 200Bf, 200Bo et 2000 est ici représenté comme une seule entité. Cependant, dans d'autres modes de réalisation, toute ou partie des modules en question est implémentée de manière distribuée, par exemple via une technologie du type DLT (pour « Distributed Ledger Technology » en anglais). Dans d'autres modes de réalisation, un module unique (implémenté de manière distribuée ou non) implémente à la fois un sous-ensemble ou l'ensemble des fonctionnalités des modules précités, i.e 200, 210A, 200Am, 200Af, 200Ao, 210B, 200Bm, 200Bf, 200Bo et 2000.

Les modules 200Ao et 200Af associés à l'opérateur MNO-A ainsi que les modules 200Bo et 200Bf associés à l'opérateur MNO-B enregistrent des informations individuelles (i.e. associées aux opérateurs MNO-A et MNO-B correspondants) qui peuvent ensuite être agrégées anonymement pour en déduire une information commune, e.g. pour obtenir un objectif commun et/ou un indice de fiabilité commun comme décrit ci-dessous en relation avec la fig. 3.

On présente désormais, en relation avec la **fig. 3** les étapes d'un procédé de gestion des ressources mis en œuvre par les modules de la fig. 2 selon un mode de réalisation de l'invention. Lors d'une **étape E300,** le module 200 reçoit une offre de ressources émise par le module 210A pour le compte de l'opérateur MNO-A. Par exemple, l'offre faite par l'opérateur MNO-A est caractérisée par un identifiant de l'offre, une date de début de disponibilité des ressources, une date de fin de disponibilité des ressources, un volume de ressources offertes, une localisation et l'identifiant du module 210A. Ainsi, l'opérateur MNO-A se comporte comme un opérateur offrant des ressources qui sont disponibles, c'est-à-dire non utilisées pour ses propres clients ou non mises à disposition d'un autre opérateur pour la période considérée. De la sorte, l'opérateur MNO-A optimise l'utilisation de ses ressources en les proposant à d'autres opérateurs. Une telle offre est par exemple certifiée et enregistrée dans le module 200.

Lors d'une **étape E310,** le module 200 reçoit une requête en ressources émise par le module 210B pour le compte de l'opérateur MNO-B. Par exemple, la requête faite par l'opérateur MNO-B est liée à un besoin ponctuel en ressources de connectivité. Une telle requête est par exemple caractérisée par un identifiant, une date de début du besoin en ressources, une durée d'utilisation des ressources, un volume de ressources, une localisation ainsi que l'identifiant du module 210B. Une telle requête est par exemple certifiée et enregistrée dans le module 200.

Lors d'une **étape E320,** le module 200 requiert et reçoit du module 2000 l'information d'objectif commun. Une telle information est représentative d'un objectif de gestion des ressources qui est commun aux opérateurs MNO-A et MNO-B. Il s'agit par exemple de fixer un objectif permettant de maximiser la participation des modules 210A et 210B des opérateurs MNO-A et MNO-B (e.g. le nombre d'offres de ressources ou de requêtes en ressources faites), ou de faire coopérer les modules en question.

Par exemple, l'information d'objectif commun est calculée à partir d'une formule unique fixée par consensus par l'ensemble des opérateurs MNO-A et MNO-B intervenant auprès du module 200 via les modules 210A et 210B. Dans des variantes, l'information d'objectif commun est fonction d'une somme d'informations représentatives d'un objectif individuel de gestion des ressources, dite information d'objectif individuel, de chaque opérateur MNO-A ou MNO-B. En d'autres termes l'information d'objectif commun est fonction de $\Sigma_i I_i$, avec $I_i$ l'information d'objectif individuel de l'opérateur indicé i parmi l'ensemble des opérateurs MNO-A et MNO-B. Une telle information d'objectif individuel est par exemple représentative d'un objectif de couverture radio sur une zone géographique donnée, ou représentative d'un objectif de qualité de service, ou encore représentative d'un objectif de débit minimum garanti ou de capacité sur une période temporelle donnée, etc.

Dans des variantes, l'information d'objectif commun est également fonction d'une information de pénalité que le module 210B requérant cherche à minimiser afin d'atteindre l'objectif commun (e.g. lorsqu'il décide ou non d'accepter l'offre faite par le module 210A suivant le mécanisme décrit ci-dessous en relation avec l'étape E350). Par exemple, la pénalité P s'exprime comme la somme de pénalités individuelles associées chacune aux transactions effectuées par l'opérateur MNO-A ou MNO-B correspondant. En d'autres termes, $P = \Sigma_i P_i$, avec $P_i$ la pénalité individuelle de l'opérateur indicé i parmi l'ensemble des opérateurs MNO-A et MNO-B.

Par exemple la pénalité individuelle $P_i$ correspond à la mise en œuvre d'un critère d'un prêté pour un rendu appliqué d'une part aux ressources acceptées par l'opérateur indicé i et d'autre part aux ressources précédemment offertes par le même opérateur. De la sorte, un opérateur est incité à équilibrer les échanges de ressources en offrant autant de ressources qu'il n'en demande. Par exemple :

$$P_i = \left| \log\left( \frac{\text{nbre d'offres de l'opérateur indicé i acceptées}}{\text{nbre d'offres acceptées par l'opérateur indicé i}} \right) \right|$$

Dans ces variantes, l'information d'objectif commun est par exemple proportionnelle à :

$$\sum_i I_i - \alpha P$$

avec $\alpha$ un coefficient associée à l'importance donnée à la pénalité $P$. De la sorte, chaque opérateur MNO-A, MNO-B est incité à équilibrer les échanges de ressources en offrant autant de ressources (e.g. des ressources d'un certain type) qu'il n'en demande (e.g. des ressources d'un autre types) afin de minimiser la pénalité $P$. L'objectif commun est ainsi atteint.

Dans certains modes de réalisation, le module 200 ne traite les offres et/ou requêtes en ressources que pour des opérateurs dont l'information d'objectif individuel $P_i$ est comprise entre des seuils prédéterminés.

Lors d'une **étape E330,** le module 200 requiert et reçoit du module 200f une information de fiabilité de l'opérateur MNO-A proposant l'offre de ressources.

Une telle information de fiabilité est par exemple issue d'une notation de la part des autres opérateurs ayant déjà effectué une transaction avec l'opérateur MNO-A comme décrit ci-dessous en relation avec l'étape E380. Dans d'autres modes de réalisation, l'information de fiabilité correspond à un indice de qualité d'expérience identifié par les utilisateurs des opérateurs MNO-A et MNO-B (e.g. sur une zone géographique), ou à un indice de qualité de service sur une période temporelle donnée (exemple mesure de qualité des réseaux récupéré par des outils de mesure du type « mon réseau » ou « speedtest ookla »).

Lors d'une **étape E340,** le module 200 envoie au module 210B, en réponse à la requête reçue lors de l'étape E310, une offre de ressources correspondant ici à l'offre émise par le module 210A et reçue par le module 200 lors de l'étape E300.

Dans d'autres modes de réalisation, le module 200 envoie plusieurs offres de ressources au module 210B en réponse à la requête reçue lors de l'étape E310. C'est par exemple le cas lorsque l'opérateur MNO-A fait plusieurs offres (e.g. concernant chacune des ressources de différentes natures), ou dans des modes de réalisation dans lesquels plus de deux opérateurs font des offres de ressources au module 200, etc.

De retour à la fig. 3, l'offre de ressources envoyée par le module 200 au module 210B comprend l'information d'objectif commun reçue lors de l'étape E320 et l'information de fiabilité reçue lors de l'étape E330. Ainsi, l'information de fiabilité permet à l'opérateur MNO-B requérant de se faire une opinion sur la qualité des ressources que l'opérateur MNO-A offrant propose. De même, l'information d'objectif commun permet d'inciter l'opérateur MNO-B requérant à accepter des offres de ressources qui vont dans le sens de l'objectif commun. Comme décrit ci-dessus en relation avec la fig. 2, le calcul de l'objectif commun fait intervenir des informations fournies par l'ensemble des opérateurs MNO-A et MNO-B au module 200 via les modules 210A et 210B. De la sorte, il est obtenu un comportement global des différents opérateurs MNO-A et MNO-B cherchant à obtenir et/ou offrir de telles ressources qui dépasse leur simple intérêt propre.

Dans certains modes de réalisation, l'étape E320 ou bien l'étape E330 n'est pas mise en œuvre et l'offre de ressources envoyée par le module 200 au module 210B de l'opérateur MNO-B requérant ne comprend qu'une information parmi l'information d'objectif commun et l'information de fiabilité. Lorsque seule l'information de fiabilité est envoyée avec l'offre de ressources, l'information d'objectif commun peut être envoyée à titre secondaire en complément de l'offre de ressources.

De retour à la fig. 3, lors d'une **étape E350,** le module 210B de l'opérateur MNO-B requérant accepte l'offre reçue en tenant compte de l'information d'objectif commun et/ou de l'information de fiabilité accompagnant l'offre.

Dans d'autres modes de réalisation dans lesquels le module 200 envoie plusieurs offres de ressources au module 210B en réponse à la requête reçue lors de l'étape E310, le module 210B accepte une (ou plusieurs) offre reçue en tenant compte de l'information d'objectif commun (e.g. en cherchant à minimiser la pénalité $P$ comme décrit ci-dessus en relation avec l'étape E320) et/ou de l'information de fiabilité accompagnant l'offre correspondante.

Dans d'autres modes de réalisation, l'offre est acceptée en prenant en compte d'autres critères propres à l'opérateur MNO-B (e.g. son objectif individuel de gestion des ressources).

De retour à la fig. 3, l'acceptation de l'offre de ressources est certifiée via un consensus obtenu sur un ensemble de résultats de fonctions modératrices appliquées à l'offre de ressources reçue lors de l'étape E340. Les fonctions modératrices sont implémentées dans les modules 200Am et 200Bm associés respectivement aux opérateurs MNO-A et MNO-B. La chaine que constituent les fonctions modératrices est initialisée par le module 200Bm, boucle sur toutes les fonctions modératrices et termine de nouveau sur le module 200Bm.

Comme décrit ci-dessus en relation avec la fig. 2, les modules 200Ao ou 200Af, ainsi que 200Bo ou 200Bf sont ici représentés chacun comme une seule entité. Cependant, dans d'autres modes de réalisation, toute ou partie des modules en question est implémentée de manière distribuée, par exemple via une technologie du type DLT. Dans d'autres modes de réalisation, un module unique (implémenté de manière distribuée ou non) implémente à la fois un sous-ensemble ou l'ensemble des fonctionnalités des modules en question.

Par exemple, il est décidé qu'un consensus est obtenu lorsque le ratio entre, d'une part, le nombre de résultats de fonctions modératrices qui est représentatif d'un accord avec le fait que l'offre soit acceptée par l'opérateur l'ayant reçue et, d'autre part, le nombre total de résultats de fonctions modératrices, est supérieur à un seuil prédéterminé (e.g. 50%, 66%, etc.). Ainsi, l'ensemble des opérateurs cherchant à obtenir et/ou offrir les ressources peuvent vérifier que l'acceptation de l'offre par l'opérateur MNO-B requérant respecte une ou plusieurs règles préalablement définies.

Plus particulièrement, une fonction modératrice peut tenir compte d'une (ou plusieurs) règle prédéterminée (e.g. des contraintes réglementaires émises par un organisme de régulation) ainsi que de données externes (e.g. pour des opérateurs cellulaires, les données publiques de localisation des antennes, les données de densifications de population pour une zone géographique donnée, etc.) afin d'évaluer une offre de ressource faite à un opérateur donné. Par exemple, sur la base de telles données, les fonctions modératrices peuvent :

- identifier si la ressource offerte dans une cellule donnée permet d'augmenter la couverture ou la capacité (cellule co-localisée ou non). La localisation de la cellule permet de connaître la densité de personnes dans la zone couverte par la cellule. Ceci permet d'estimer le taux de couverture du territoire ainsi que le taux de couverture de la population. Ce résultat peut également être utilisé par un régulateur externe pour valider le respect de la règlementation en termes de couverture. En effet, de par l'allocation dynamique des ressources effectuée via le module 200, le taux de couverture d'un opérateur MNO-A ou MNO-B risque de varier continuellement au cours du temps ce qui peut entrainer des difficultés pour savoir si les opérateurs MNO-A et MNO-B respectent les contraintes réglementaires au cours du temps.

- identifier le poids de chaque transaction entre les opérateurs MNO-A et MNO-B avec une pondération qui varie dans le temps. Par exemple, plus le poids donné à une transaction est important, plus les contraintes observées par les fonctions modératrices doivent être respectées. Ainsi, les premières transactions sont par exemple à poids nul pour inciter les opérateurs MNO-A et MNO-B à échanger des ressources. Le poids peut ensuite varier selon certains critères comme par exemple :

- un opérateur MNO-A ou MNO-B fournit uniquement des ressources et perd des capacités de ressources ne lui permettant pas de respecter des contraintes réglementaires données. Le poids de ses transactions ainsi augmente ;
- un opérateur MNO-A ou MNO-B partage des ressources avec d'autres opérateurs ce qui permet d'augmenter la capacité de chaque opérateur et permet de diminuer la consommation électrique des infrastructures. Le poids de ses transactions ainsi diminue ;
- un opérateur MNO-A ou MNO-B demande des ressources et dès qu'il atteint le seuil minimum de couverture, le poids de ses transactions est augmenté pour l'inciter à continuer à investir dans son réseau ; et
- annuler une offre si elle ne respecte les règles des fonctions modératrices lorsqu'elle a atteint un certain poids.

Lors d'une **étape E360,** le module 210B de l'opérateur MNO-B requérant envoi au module 200 une information représentative de l'acceptation de manière certifiée de l'offre de ressources reçue lors de l'étape E340. Ainsi, la transaction certifiée (i.e. l'offre acceptée de manière certifiée) est enregistrée de manière certifiée dans le module 200.

Lors d'une **étape E370,** les ressources sont échangées entre les opérateurs MNO-A et MNO-B. Par exemple le terminal UEB, client de l'opérateur MNO-B, se retrouver temporairement rattaché à une station de base gérée par l'opérateur MNO-A. Pour ce faire, une technique telle que décrite dans la demande FR1763063 est par exemple mise en œuvre afin que l'opérateur MNO-B accède aux ressources offertes par l'opérateur MNO-A.

De retour à la fig. 3, lors d'une **étape E380,** chacun des opérateurs MNO-A et MNO-B est invité via le module 210A ou 210B correspondant à noter la fiabilité de l'autre opérateur afin de mettre à jour l'information de fiabilité de l'autre opérateur.

Par exemple, l'opérateur MNO-B base sa note sur le fait que les ressources ont bien été mises à disposition ou non. De son côté, l'opérateur MNO-A base sa note par exemple sur le fait que l'opérateur MNO-B a effectivement effectué un paiement en échange des ressources obtenues. Selon d'autres exemples, l'opérateur MNO-B base sa note sur la qualité des ressources offertes. Plus particulièrement, des notations sont remontées à l'opérateur MNO-B par des clients utilisateurs de terminaux connectés aux ressources proposées par l'opérateur offrant (e.g. via des notifications par SMS (de « Short Message Service » en anglais) ou USSD (de « Unstructured Supplementary Service Data » en anglais) ou via des campagnes de tests (e.g. « Minimizing drive tests 3GPP TS 37.320 »), ou par les outils de mesure dans les terminaux du type « mon réseau » ou « speedtest ookla », ou encore par des mécanismes de services web). Une homogénéisation des notes peut également être effectuée (recalage de moyenne par exemple) pour palier le problème des clients plus exigeants que d'autres. Cette homogénéisation peut être poursuivie également au sein d'une cellule entre opérateurs afin d'estimer si la cellule est intéressante.

De retour à la fig. 3, lors d'une **étape E390,** le module 210B requérant effectue une mise à jour de l'information d'objectif individuel de l'opérateur MNO-B requérant suite à l'acceptation de manière certifiée de l'offre de ressources.

De la sorte, l'information d'objectif commun peut être mis à jour également par le module 200 sur la base de l'information d'objectif individuel de l'opérateur MNO-B mise à jour selon les mécanismes décrits ci-dessus en relation avec l'étape E320.

On présente désormais, en relation avec la **fig. 4** un exemple de structure de dispositif 400 permettant de mettre en œuvre les étapes du procédé de gestion de gestion des ressources de la fig. 3 selon un mode de réalisation de l'invention.

Le dispositif 400 comprend une mémoire vive 403 (par exemple une mémoire RAM), une unité de traitement 402 équipée par exemple d'un processeur, et pilotée par un programme d'ordinateur stocké dans une mémoire morte 401 (par exemple une mémoire ROM ou un disque dur). A l'initialisation, les instructions de code du programme d'ordinateur sont par exemple chargées dans la mémoire vive 403 avant d'être exécutées par le processeur de l'unité de traitement 402. Cette fig. 4 illustre seulement une manière particulière, parmi plusieurs possibles, de réaliser le dispositif 400 afin qu'il effectue certaines étapes du procédé de gestion selon l'invention (selon l'un quelconque des modes de réalisation et/ou variantes décrit(e)s ci-dessus en relation avec la fig. 3). En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où le dispositif 400 est réalisé avec une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

Dans certains modes de réalisation, le dispositif 400 implémente l'un quelconque des modules 200, 210A, 200Am, 200Af, 200Ao, 210B, 200Bm, 200Bf, 200Bo et 200o.

Dans certains modes de réalisation, le dispositif 400 implémente plusieurs ou la totalité des modules 200, 210A, 200Am, 200Af, 200Ao, 210B, 200Bm, 200Bf, 200Bo et 200o.

Dans certains modes de réalisation, le dispositif 400 est inclus dans un nœud de réseau.

## Revendications

1. Procédé de gestion de ressources de télécommunications allouées dynamiquement à une pluralité d'opérateurs de télécommunications (MNO-A, MNO-B),

   dans lequel au moins un **module (200) de gestion centralisée desdites ressources** effectue les étapes suivantes :

      - **réception** (E310) d'une requête en ressources émise par un module (210B), dit **module requérant,** de représentation d'un opérateur de télécommunications de ladite pluralité, dit opérateur requérant, auprès dudit au moins un module de gestion centralisée desdites ressources ;
      - **envoi** (E340), audit module requérant et en réponse à ladite requête, d'au moins une offre de ressources,

   ladite au moins une offre de ressources comprenant :

      - une information, dite information d'objectif commun, représentative d'un objectif de gestion desdites ressources commun à ladite pluralité d'opérateurs de télécommunications ; et/ou
      - au moins une information de fiabilité d'au moins un autre opérateur de télécommunications de ladite pluralité, dit opérateur offrant, proposant ladite au moins une offre de ressources, ladite au moins une information de fiabilité étant représentative de la qualité des ressources offertes par ledit opérateur offrant,

   **caractérisé en ce que** ledit au moins un module de gestion centralisée desdites ressources effectue en outre une **réception** (E300) de ladite au moins une offre de ressources émise par au moins un module (210A), dit **module offrant,** de représentation dudit au moins un opérateur offrant auprès dudit au moins un module de gestion centralisée desdites ressources.

2. Procédé selon la revendication 1 dans lequel ledit au moins un module de gestion centralisée desdites ressources effectue en outre une **réception** (E320, E330) d'une information émise par ledit module requérant et représentative d'une acceptation certifiée d'une offre de ressources parmi ladite au moins une offre de ressources envoyée audit module requérant, ladite acceptation étant certifiée par un consensus obtenu sur un ensemble de résultats de fonctions modératrices appliquées à ladite offre de ressources, lesdites fonctions modératrices étant associées aux différents opérateurs de ladite pluralité d'opérateurs.

3. Procédé de gestion de ressources de télécommunications allouées dynamiquement à une pluralité d'opérateurs de télécommunications (MNO-A, MNO-B),

dans lequel un module (210B), dit **module requérant,** de représentation d'un opérateur de télécommunications de ladite pluralité, dit opérateur requérant, auprès d'au moins un **module (200) de gestion centralisée desdites ressources,** effectue les étapes suivantes :

- **envoi** (E310) d'au moins une requête en ressources audit au moins un module de gestion centralisée desdites ressources ;
- **réception** (E340) d'au moins une offre de ressources envoyée par ledit au moins un module de gestion centralisée desdites ressources en réponse à ladite au moins une requête,

ladite au moins une offre de ressources comprenant :

- une information, dite information d'objectif commun, représentative d'un objectif de gestion desdites ressources commun à ladite pluralité d'opérateurs de télécommunications ; et/ou
- au moins une information de fiabilité d'au moins un autre opérateur de télécommunications de ladite pluralité, dit opérateur offrant, proposant ladite au moins une offre de ressources, ladite au moins une information de fiabilité étant représentative de la qualité des ressources offertes par ledit opérateur offrant,

**caractérisé en ce que** ladite au moins une offre de ressources envoyée par ledit au moins un module de gestion centralisée desdites ressources est elle-même émise par au moins un module (210A), dit **module offrant,** de représentation dudit au moins un opérateur offrant auprès dudit au moins un module de gestion centralisée desdites ressources.

4. Procédé selon la revendication 3 dans lequel ledit module requérant effectue en outre une **acceptation** (E350) certifiée d'une offre de ressources parmi ladite au moins une offre de ressources envoyée par ledit au moins un module de gestion centralisée desdites ressources, ladite offre de ressources étant acceptée en tenant compte de ladite information d'objectif commun et/ou de ladite au moins une information de fiabilité,
ladite acceptation étant certifiée par un consensus obtenu sur un ensemble de résultats de fonctions modératrices appliquées à ladite offre de ressources, lesdites fonctions modératrices étant associées aux différents opérateurs de ladite pluralité d'opérateurs.

5. Procédé selon la revendication 4 dans lequel ledit module requérant effectue en outre un **envoi** (E360), audit au moins un module de gestion centralisée desdites ressources, d'une information représentative de l'acceptation de manière certifiée de ladite offre de ressources.

6. Procédé selon la revendication 4 ou 5 dans lequel ledit module requérant effectue en outre une **mise à jour** (E380) de l'information de fiabilité concernant l'opérateur offrant ayant proposé ladite offre de ressources acceptée de manière certifiée.

7. Procédé selon l'une quelconque des revendications 1 à 6 dans lequel ladite information d'objectif commun est fonction d'une somme d'informations représentatives d'un objectif individuel de gestion desdites ressources, dite information d'objectif individuel, de chaque opérateur de ladite pluralité d'opérateurs de télécommunications.

8. Procédé selon la revendication 7 en ce qu'elle dépend de l'une quelconque des revendications 5 à 7 dans lequel ladite information d'objectif commun est fonction d'une information de pénalité, ladite offre de ressources étant acceptée en cherchant à minimiser ladite pénalité afin d'atteindre l'objectif commun.

9. Procédé selon la revendication 7 ou 8 en ce qu'elle dépend de l'une quelconque des revendications 4 à 6 dans lequel ledit module requérant effectue une **mise à jour** (E390) de l'information d'objectif individuel dudit opérateur requérant suite à l'acceptation de manière certifiée de ladite offre de ressources.

10. Produit programme d'ordinateur comprenant des instructions de code de programme pour la mise en œuvre du procédé selon l'une quelconque des revendications 1 à 9, lorsque ledit programme est exécuté sur un ordinateur.

**11.** Dispositif de gestion centralisée de ressources de télécommunications allouées dynamiquement à une pluralité d'opérateurs de télécommunications comprenant une machine de calcul reprogrammable (402) ou une machine de calcul dédiée, configurée pour :

- recevoir une requête en ressources émise par un module (210B), dit module requérant, de représentation d'un opérateur de télécommunications de ladite pluralité, dit opérateur requérant, auprès dudit au moins un module de gestion centralisée desdites ressources ;
- envoyer, audit module requérant et en réponse à ladite requête, au moins une offre de ressources,
ladite au moins une offre de ressources comprenant :

- une information, dite information d'objectif commun, représentative d'un objectif de gestion desdites ressources commun à ladite pluralité d'opérateurs de télécommunications ; et/ou
- au moins une information de fiabilité d'au moins un autre opérateur de télécommunications de ladite pluralité, dit opérateur offrant, proposant ladite au moins une offre de ressources, ladite au moins une information de fiabilité étant représentative de la qualité des ressources offertes par ledit opérateur offrant,

**caractérisé en ce que** la machine de calcul reprogrammable ou machine de calcul dédiée est en outre configurée pour recevoir ladite au moins une offre de ressources émise par au moins un module (210A), dit module offrant, de représentation dudit au moins un opérateur offrant auprès dudit au moins un module de gestion centralisée desdites ressources

**12.** Dispositif de représentation, auprès d'au moins un module de gestion centralisée de ressources de télécommunications allouées dynamiquement à une pluralité d'opérateurs de télécommunications, d'un opérateur de télécommunications de ladite pluralité, dit opérateur requérant, comprenant une machine de calcul reprogrammable (502) ou une machine de calcul dédiée, configurée pour :

- envoyer au moins une requête en ressources audit au moins un module de gestion centralisée desdites ressources ;
- recevoir au moins une offre de ressources émise par ledit au moins un module de gestion centralisée desdites ressources en réponse à ladite au moins une requête,
ladite au moins une offre de ressources comprenant :

- une information, dite information d'objectif commun, représentative d'un objectif de gestion desdites ressources commun à ladite pluralité d'opérateurs de télécommunications ; et/ou
- au moins une information de fiabilité d'au moins un autre opérateur de télécommunications de ladite pluralité, dit opérateur offrant, proposant ladite au moins une offre de ressources, ladite au moins une information de fiabilité étant représentative de la qualité des ressources offertes par ledit opérateur offrant,

**caractérisé en ce que** ladite au moins une offre de ressources envoyée par ledit au moins un module de gestion centralisée desdites ressources est elle-même émise par au moins un module (210A), dit **module offrant,** de représentation dudit au moins un opérateur offrant auprès dudit au moins un module de gestion centralisée desdites ressources.

**13.** Nœud d'un réseau de télécommunications **caractérisé en ce qu'**il comprend au moins un dispositif selon la revendication 11 ou 12.

**Patentansprüche**

**1.** Verfahren zur Verwaltung von Telekommunikationsressourcen, die einer Vielzahl von Telekommunikationsbetreibern (MNO-A, MNO-B) dynamisch zugewiesen werden,

wobei mindestens ein Modul (200) zur zentralen Verwaltung der Ressourcen die folgenden Schritte ausführt:

- Empfangen (E310) einer Ressourcenanforderung, die von einem Modul (210B), dem sogenannten anfordernden Modul, gesendet wurde, das einen Telekommunikationsbetreiber aus der Vielzahl, den sogenannten anfordernden Betreiber, bei dem mindestens einen Modul zur zentralen Verwaltung der Ressourcen vertritt;

- Senden (E340) mindestens eines Ressourcenangebots an das anfordernde Modul als Antwort auf die Anforderung,

wobei das mindestens eine Ressourcenangebot Folgendes aufweist:

- eine Information, die sogenannte Information über ein gemeinsames Ziel, die ein Verwaltungsziel der Ressourcen darstellt, das der Vielzahl von Telekommunikationsbetreibern gemeinsam ist; und/oder
- mindestens eine Zuverlässigkeitsinformation von mindestens einem anderen Telekommunikationsbetreiber aus der Vielzahl, dem sogenannten anbietenden Betreiber, der das mindestens eine Ressourcenangebot anbietet, wobei die mindestens eine Zuverlässigkeitsinformation repräsentativ für die Qualität der von dem anbietenden Betreiber angebotenen Ressourcen ist,

**dadurch gekennzeichnet, dass** das mindestens eine Modul zur zentralen Verwaltung der Ressourcen darüber hinaus das Empfangen (E300) des mindestens einen Ressourcenangebots durchführt, das von mindestens einem Modul (210A), dem sogenannten anbietenden Modul, gesendet wird, das den mindestens einen anbietenden Betreiber bei dem mindestens einen Modul zur zentralen Verwaltung der Ressourcen vertritt.

2. Verfahren nach Anspruch 1, wobei das mindestens eine Modul zur zentralen Verwaltung der Ressourcen darüber hinaus eine vom anfordernden Modul gesendete Information empfängt (E320, E330), die eine zertifizierte Annahme eines Ressourcenangebots unter den mindestens einem an das anfordernde Modul gesendeten Ressourcenangeboten darstellt,
wobei die Annahme durch einen Konsens bestätigt wird, der über eine Reihe von Ergebnissen moderierender Funktionen erzielt wurde, die auf das Ressourcenangebot angewendet wurden, wobei die moderierenden Funktionen den verschiedenen Betreibern der genannten Vielzahl von Betreibern zugeordnet sind.

3. Verfahren zur Verwaltung von Telekommunikationsressourcen, die einer Vielzahl von Telekommunikationsbetreibern (MNO-A, MNO-B) dynamisch zugewiesen werden,

wobei ein Modul (210B), das sogenannte anfordernde Modul, das einen Telekommunikationsbetreiber aus der Vielzahl, den sogenannten anfordernden Betreiber, bei dem mindestens einen Modul (200) zur zentralen Verwaltung der Ressourcen vertritt, die folgenden Schritte ausführt:

- Senden (E310) mindestens einer Ressourcenanforderung an mindestens ein Modul zur zentralen Verwaltung der Ressourcen;
- Empfangen (E340) mindestens eines Ressourcenangebots, das von dem mindestens einen Modul zur zentralen Verwaltung der Ressourcen als Antwort auf die mindestens eine Anforderung gesendet wurde,

wobei das mindestens eine Ressourcenangebot Folgendes aufweist:

- eine Information, die sogenannte Information über ein gemeinsames Ziel, die ein Verwaltungsziel der Ressourcen darstellt, das der Vielzahl von Telekommunikationsbetreibern gemeinsam ist; und/oder
- mindestens eine Zuverlässigkeitsinformation von mindestens einem anderen Telekommunikationsbetreiber aus der Vielzahl, dem sogenannten anbietenden Betreiber, der das mindestens eine Ressourcenangebot anbietet, wobei die mindestens eine Zuverlässigkeitsinformation repräsentativ für die Qualität der von dem anbietenden Betreiber angebotenen Ressourcen ist,

**dadurch gekennzeichnet, dass** das mindestens eine Ressourcenangebot, das von dem mindestens einen Modul zur zentralen Verwaltung der Ressourcen gesendet wird, selbst von mindestens einem Modul (210A), dem sogenannten anbietenden Modul, gesendet wird, das den mindestens einen anbietenden Betreiber bei dem mindestens einen Modul zur zentralen Verwaltung der Ressourcen vertritt.

4. Verfahren nach Anspruch 3, wobei das anfordernde Modul darüber hinaus eine zertifizierte Annahme (E350) eines Ressourcenangebots aus dem mindestens einen Ressourcenangebot durchführt, das von dem mindestens einen Modul zur zentralen Verwaltung der Ressourcen gesendet wurde, wobei das Ressourcenangebot unter Berücksichtigung der Information über ein gemeinsames Ziel und/oder der mindestens einen Zuverlässigkeitsinformation angenommen wird,
wobei die Annahme durch einen Konsens bestätigt wird, der über eine Reihe von Ergebnissen moderierender Funktionen erzielt wurde, die auf das Ressourcenangebot angewendet wurden, wobei die moderierenden Funktionen den verschiedenen Betreibern der genannten Vielzahl von Betreibern zugeordnet sind.

5. Verfahren nach Anspruch 4, wobei das anfordernde Modul darüber hinaus eine Information, die die zertifizierte Annahme des Ressourcenangebots darstellt, an das mindestens eine Modul zur zentralen Verwaltung der Ressourcen sendet (E360).

6. Verfahren nach Anspruch 4 oder 5, wobei das anfordernde Modul darüber hinaus eine Aktualisierung (E380) der Zuverlässigkeitsinformation bezüglich des anbietenden Betreibers durchführt, der das angenommene Ressourcenangebot in zertifizierter Form angeboten hat.

7. Verfahren nach einem der Ansprüche 1 bis 6, wobei die Information über ein gemeinsames Ziel eine Funktion einer Summe von Informationen ist, die ein individuelles Ziel der Verwaltung der Ressourcen darstellen, die sogenannte individuelle Zielinformation, und die von jedem der Vielzahl von Telekommunikationsbetreibern stammen.

8. Verfahren nach Anspruch 7, das von einem der Ansprüche 5 bis 7 abhängt, wobei die Information über ein gemeinsames Ziel von einer Strafinformation abhängt und das Ressourcenangebot angenommen wird, indem versucht wird, die Strafe zu minimieren, um das gemeinsame Ziel zu erreichen.

9. Verfahren nach Anspruch 7 oder 8, das von einem der Ansprüche 4 bis 6 abhängt, wobei das anfordernde Modul nach der zertifizierten Annahme des Ressourcenangebots eine Aktualisierung (E390) der individuellen Zielinformationen des anfordernden Betreibers durchführt.

10. Computerprogrammprodukt, das Programmcodeanweisungen aufweist, die bei der Ausführung des Programms auf einem Computer das Verfahren nach einem der Ansprüche 1 bis 9 durchführen.

11. Vorrichtung zur zentralen Verwaltung von Telekommunikationsressourcen, die einer Vielzahl von Telekommunikationsbetreibern dynamisch zugewiesen werden, mit einer umprogrammierbaren Rechenmaschine (402) oder einer dedizierten Rechenmaschine, die konfiguriert ist, um:

   - eine Ressourcenanforderung zu empfangen, die von einem Modul (210B), dem sogenannten anfordernden Modul gesendet wurde, das einen Telekommunikationsbetreiber aus der Vielzahl, den sogenannten anfordernden Betreiber, bei dem mindestens einen Modul zur zentralen Verwaltung der Ressourcen vertritt;
   - mindestens eine Ressourcenangebot an das anfordernde Modul als Antwort auf die Anforderung zu senden, wobei das mindestens eine Ressourcenangebot Folgendes aufweist:

      - eine Information, die sogenannte Information über ein gemeinsames Ziel, die ein Verwaltungsziel der Ressourcen darstellt, das der Vielzahl von Telekommunikationsbetreibern gemeinsam ist; und/oder
      - mindestens eine Zuverlässigkeitsinformation von mindestens einem anderen Telekommunikationsbetreiber aus der Vielzahl, dem sogenannten anbietenden Betreiber, der das mindestens eine Ressourcenangebot anbietet, wobei die mindestens eine Zuverlässigkeitsinformation repräsentativ für die Qualität der von dem anbietenden Betreiber angebotenen Ressourcen ist,

   **dadurch gekennzeichnet, dass** die umprogrammierbare Rechenmaschine oder die dedizierte Rechenmaschine darüber hinaus konfiguriert ist, um das mindestens eine Ressourcenangebot zu empfangen, das von mindestens einem Modul (210A), dem sogenannten anbietenden Modul, gesendet wird, das den mindestens einen anbietenden Betreiber bei dem mindestens einen Modul zur zentralen Verwaltung der Ressourcen vertritt.

12. Vorrichtung zur Vertretung eines Telekommunikationsbetreibers aus der Vielzahl, dem sogenannten anfordernden Betreiber, bei mindestens einem Modul zur zentralen Verwaltung von Telekommunikationsressourcen, die einer Vielzahl von Telekommunikationsbetreibern dynamisch zugewiesen werden, mit einer umprogrammierbaren Rechenmaschine (502) oder einer dedizierten Rechenmaschine, die konfiguriert ist, um:

   - mindestens eine Ressourcenanforderung an mindestens ein Modul zur zentralen Verwaltung dieser Ressourcen zu senden;
   - mindestens ein Ressourcenangebot zu empfangen, das von dem mindestens einen Modul zur zentralen Verwaltung der Ressourcen als Antwort auf die mindestens eine Anforderung gesendet wurde, wobei das mindestens eine Ressourcenangebot Folgendes aufweist:

- eine Information, die sogenannte Information über ein gemeinsames Ziel, die ein Verwaltungsziel der Ressourcen darstellt, das der Vielzahl von Telekommunikationsbetreibern gemeinsam ist; und/oder
- mindestens eine Zuverlässigkeitsinformation von mindestens einem anderen Telekommunikationsbetreiber aus der Vielzahl, dem sogenannten anbietenden Betreiber, der das mindestens eine Ressourcenangebot anbietet, wobei die mindestens eine Zuverlässigkeitsinformation repräsentativ für die Qualität der von dem anbietenden Betreiber angebotenen Ressourcen ist,

**dadurch gekennzeichnet, dass** das mindestens eine Ressourcenangebot, das von dem mindestens einen Modul zur zentralen Verwaltung der Ressourcen gesendet wird, selbst von mindestens einem Modul (210A), dem sogenannten anbietenden Modul, gesendet wird, das den mindestens einen anbietenden Betreiber bei dem mindestens einen Modul zur zentralen Verwaltung der Ressourcen vertritt.

13. Knoten eines Telekommunikationsnetzes, **dadurch gekennzeichnet, dass** er mindestens eine Vorrichtung nach Anspruch 11 oder 12 aufweist.

## Claims

1. Method for managing telecommunications resources dynamically allocated to a plurality of telecommunications operators (MNO-A, MNO-B),

   wherein at least one module (200) for centralized management of said resources carries out the following steps:

   - receiving (E310) a request for resources sent by a module (210B), referred to as the requesting module, representing a telecommunications operator of said plurality, referred to as the requesting operator, close to said at least one module for centralized management of said resources;
   - sending (E340), to said requesting module and in response to said request, at least one offer of resources,

   said at least one offer of resources comprising:

   - information, referred to as common objective information, representative of an objective for managing said resources that is common to said plurality of telecommunications operators; and/or
   - at least one piece of reliability information of at least one other telecommunications operator of said plurality, referred to as the offering operator, proposing said at least one offer of resources, said at least one piece of reliability information being representative of the quality of the resources offered by said offering operator,

   **characterized in that** said at least one module for centralized management of said resources furthermore receives (E300) said at least one offer of resources sent by at least one module (210A), referred to as the offering module, representing said at least one offering operator close to said at least one module for centralized management of said resources.

2. Method according to Claim 1, wherein said at least one module for centralized management of said resources furthermore receives (E320, E330) information sent by said requesting module and representative of certified acceptance of an offer of resources from amongst said at least one offer of resources sent to said requesting module, said acceptance being certified by a consensus obtained over a set of results of moderating functions applied to said offer of resources, said moderating functions being associated with the various operators of said plurality of operators.

3. Method for managing telecommunications resources dynamically allocated to a plurality of telecommunications operators (MNO-A, MNO-B),

   wherein a module (210B), referred to as the requesting module, representing a telecommunications operator of said plurality, referred to as the requesting operator, close to at least one module (200) for centralized management of said resources, carries out the following steps:

   - sending (E310) at least one request for resources to said at least one module for centralized management of said resources;
   - receiving (E340) at least one offer of resources sent by said at least one module for centralized management of said resources in response to said at least one request,

said at least one offer of resources comprising:

- information, referred to as common objective information, representative of an objective for managing said resources that is common to said plurality of telecommunications operators; and/or
- at least one piece of reliability information of at least one other telecommunications operator of said plurality, referred to as the offering operator, proposing said at least one offer of resources, said at least one piece of reliability information being representative of the quality of the resources offered by said offering operator,

**characterized in that** said at least one offer of resources sent by said at least one module for centralized management of said resources is itself sent by at least one module (210A), referred to as the offering module, representing said at least one offering operator close to said at least one module for centralized management of said resources.

4. Method according to Claim 3, wherein said requesting module furthermore carries out certified acceptance (E350) of an offer of resources from amongst said at least one offer of resources sent by said at least one module for centralized management of said resources, said offer of resources being accepted taking into account said common objective information and/or said at least one piece of reliability information,
said acceptance being certified by a consensus obtained over a set of results of moderating functions applied to said offer of resources, said moderating functions being associated with the various operators of said plurality of operators.

5. Method according to Claim 4, wherein said requesting module furthermore sends (E360), to said at least one module for centralized management of said resources, information representative of the certified acceptance of said offer of resources.

6. Method according to Claim 4 or 5, wherein said requesting module furthermore updates (E380) the reliability information relating to the offering operator having proposed said offer of resources accepted in a certified manner.

7. Method according to any one of Claims 1 to 6, wherein said common objective information is based on a sum of information representative of an individual objective for managing said resources, referred to as individual objective information, of each operator of said plurality of telecommunications operators.

8. Method according to Claim 7, when it is dependent on any one of Claims 5 to 7, wherein said common objective information is based on penalty information, said offer of resources being accepted by seeking to minimize said penalty in order to achieve the common objective.

9. Method according to Claim 7 or 8, when it is dependent on any one of Claims 4 to 6, wherein said requesting module updates (E390) the individual objective information of said requesting operator following the certified acceptance of said offer of resources.

10. Computer program product comprising program code instructions for implementing the method according to any one of Claims 1 to 9 when said program is executed on a computer.

11. Device for centralized management of telecommunications resources dynamically allocated to a plurality of telecommunications operators comprising a reprogrammable computing machine (402) or a dedicated computing machine, which machine is configured to:

- receive a request for resources sent by a module (210B), referred to as the requesting module, representing a telecommunications operator of said plurality, referred to as the requesting operator, close to said at least one module for centralized management of said resources;
- send, to said requesting module and in response to said request, at least one offer of resources, said at least one offer of resources comprising:

- information, referred to as common objective information, representative of an objective for managing said resources that is common to said plurality of telecommunications operators; and/or
- at least one piece of reliability information of at least one other telecommunications operator of said plurality, referred to as the offering operator, proposing said at least one offer of resources, said at least one piece of reliability information being representative of the quality of the resources offered by said offering operator,

**characterized in that** the reprogrammable computing machine or dedicated computing machine is furthermore configured to receive said at least one offer of resources sent by at least one module (210A), referred to as the offering module, representing said at least one offering operator close to said at least one module for centralized management of said resources.

12. Device representing, close to at least one module for centralized management of telecommunications resources dynamically allocated to a plurality of telecommunications operators, a telecommunications operator of said plurality, referred to as the requesting operator, comprising a reprogrammable computing machine (502) or a dedicated computing machine, which machine is configured to:

- send at least one request for resources to said at least one module for centralized management of said resources;
- receive at least one offer of resources sent by said at least one module for centralized management of said resources in response to said at least one request,

said at least one offer of resources comprising:

- information, referred to as common objective information, representative of an objective for managing said resources that is common to said plurality of telecommunications operators; and/or
- at least one piece of reliability information of at least one other telecommunications operator of said plurality, referred to as the offering operator, proposing said at least one offer of resources, said at least one piece of reliability information being representative of the quality of the resources offered by said offering operator,

**characterized in that** said at least one offer of resources sent by said at least one module for centralized management of said resources is itself sent by at least one module (210A), referred to as the offering module, representing said at least one offering operator close to said at least one module for centralized management of said resources.

13. Node of a telecommunications network, **characterized in that** it comprises at least one device according to Claim 11 or **12.**

[fig. 1]

[fig. 2]

[fig. 3]

[fig. 4]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2017353857 A1
- WO 2018004641 A1
- US 2014357218 A1
- FR 1763063